# EUROPEAN PATENT APPLICATION

(11) **EP 4 647 863 A1**
(43) Date of publication of application: **12.11.2025**
(21) Application number: 24741199.4
(22) Date of filing: 08.01.2024
(51) Int. Cl.: G05D 1/43

(54) **PATH PLANNING METHOD FOR POOL CLEANING ROBOT AND COMPUTER-READABLE STORAGE MEDIUM**

(30) Priority: 09.01.2023 CN 202310025553
(71) Applicant: Wybotics Co., Ltd, Tianjin 300462 (CN)
(72) Inventor: YU, Qian, Tianjin 300462 (CN); LI, Cheng, Tianjin 300462 (CN)
(74) Representative: Winter, Brandl - Partnerschaft mbB
(86) International application number: PCT/CN2024/071167
(87) International publication number: WO 2024/149200

(57) **Abstract**

The present disclosure discloses a path planning method for a pool cleaning robot. The method includes: controlling a pool cleaning robot to move to a first position on a pool wall of a pool, the first position being a position corresponding to a waterline of the pool; controlling the pool cleaning robot to turn a first angle, so as to adjust a moving direction of the pool cleaning robot to be a first direction; controlling the pool cleaning robot to move in the first direction on the pool wall; when the pool cleaning robot has moved a first distance in the first direction, controlling the pool cleaning robot to turn a second angle, so as to adjust the moving direction of the pool cleaning robot to be downward along the pool wall; and controlling the pool cleaning robot to move downwards along the pool wall.

## Description

### CROSS REFERENCE TO RELATED APPLICATION

The present disclosure claims priority to Chinese Patent Application No. 2023100255531, entitled "PATH PLANNING METHOD AND APPARATUS FOR POOL CLEANING ROBOT AND POOL CLEANING ROBOT" and filed on January 9, 2023, the entire contents of which are incorporated herein by reference.

### TECHNICAL FIELD

The present disclosure relates to the field of robot technology, and more particularly, to a path planning method and apparatus for a pool cleaning robot, the pool cleaning robot, and a storage medium.

### BACKGROUND

With the development of computer technologies, robot technologies have also developed rapidly. For example, customers use vacuum cleaning robots to clean floors of houses, use window cleaning robots to clean windows of the houses, and use pool cleaning robots to clean swimming pools.

### SUMMARY

Embodiments of the present disclosure provide a path planning method and apparatus for a pool cleaning robot, the pool cleaning robot, and a storage medium. The technical solutions are described as below.

In one aspect, there is provided a path planning method for a pool cleaning robot, which includes:
controlling the pool cleaning robot to move to a first position on a pool wall of a pool, the first position being a position corresponding to a waterline of the pool;
controlling the pool cleaning robot to turn a first angle, so as to adjust a moving direction of the pool cleaning robot to be a first direction;
controlling the pool cleaning robot to move in the first direction on the pool wall;
when the pool cleaning robot has moved a first distance in the first direction, controlling the pool cleaning robot to turn a second angle, so as to adjust the moving direction of the pool cleaning robot to be downward along the pool wall; and
controlling the pool cleaning robot to move downwards along the pool wall.

In another aspect, there is provided a path planning apparatus for a pool cleaning robot, which includes:
a movement control module configured to control the pool cleaning robot to move to a first position on a pool wall of a pool, the first position being a position corresponding to a waterline of the pool; and
a turning control module configured to control the pool cleaning robot to turn a first angle, so as to adjust a moving direction of the pool cleaning robot to be a first direction; wherein
the movement control module is further configured to control the pool cleaning robot to move in the first direction on the pool wall;
the turning control module is further configured to control, when the pool cleaning robot has moved a first distance in the first direction, the pool cleaning robot to turn a second angle, so as to adjust the moving direction of the pool cleaning robot to be downward along the pool wall; and
the movement control module is further configured to control the pool cleaning robot to move downwards along the pool wall.

In yet another aspect, there is provided a pool cleaning robot, which includes a robot controller. The robot controller includes one or more processors and one or more memories, where the one or more memories store at least one computer program, and the computer program is loaded by the one or more processors to execute the following steps of:
controlling the pool cleaning robot to move to a first position on a pool wall of a pool, the first position being a position corresponding to a waterline of the pool;
controlling the pool cleaning robot to turn a first angle, so as to adjust a moving direction of the pool cleaning robot to be a first direction;
controlling the pool cleaning robot to move in the first direction on the pool wall;
when the pool cleaning robot has moved a first distance in the first direction, controlling the pool cleaning robot to turn a second angle, so as to adjust the moving direction of the pool cleaning robot to be downward along the pool wall; and
controlling the pool cleaning robot to move downwards along the pool wall.

In still another aspect, there is provided a computer-readable storage medium, which stores at least one computer program loaded by a processor to execute the following steps of:
controlling the pool cleaning robot to move to a first position on a pool wall of a pool, the first position being a position corresponding to a waterline of the pool;
controlling the pool cleaning robot to turn a first angle, so as to adjust a moving direction of the pool cleaning robot to be a first direction;
controlling the pool cleaning robot to move in the first direction on the pool wall;
when the pool cleaning robot has moved a first distance in the first direction, controlling the pool cleaning robot to turn a second angle, so as to adjust the moving direction of the pool cleaning robot to be downward along the pool wall; and
controlling the pool cleaning robot to move downwards along the pool wall.

In still another aspect, there is provided a computer program product or computer program, which includes a program code stored in the computer-readable storage medium. The processor of the robot controller reads the program code from the computer-readable storage medium and executes it, causing the robot controller to perform the following steps of:
controlling the pool cleaning robot to move to a first position on a pool wall of a pool, the first position being a position corresponding to a waterline of the pool;
controlling the pool cleaning robot to turn a first angle, so as to adjust a moving direction of the pool cleaning robot to be a first direction;
controlling the pool cleaning robot to move in the first direction on the pool wall;
when the pool cleaning robot has moved a first distance in the first direction, controlling the pool cleaning robot to turn a second angle, so as to adjust the moving direction of the pool cleaning robot to be downward along the pool wall; and
controlling the pool cleaning robot to move downwards along the pool wall.

### BRIEF DESCRIPTION OF THE DRAWINGS

To describe the technical solutions in the embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic diagram of a pool cleaning robot on a pool wall provided in an embodiment of the present disclosure;
FIG. 2 is a flowchart of a path planning method for a pool cleaning robot provided in an embodiment of the present disclosure;
FIG. 3 is a flowchart of a path planning method for a pool cleaning robot provided in an embodiment of the present disclosure;
FIG. 4 is a schematic diagram of a cleaning route of a pool cleaning robot provided in an embodiment of the present disclosure;
FIG. 5 is a schematic structural diagram of a path planning apparatus for a pool cleaning robot provided in an embodiment of the present disclosure; and
FIG. 6 is a schematic structural diagram of a robot controller provided in an embodiment of the present disclosure.

### DETAILED DESCRIPTION

To make the objectives, technical solutions and advantages of the present disclosure clearer, the embodiments of the present disclosure will be further described in detail below with reference to the accompanying drawings.

Terms such as "first" and "second" in the present disclosure are used to distinguish between the same or similar items whose roles and functions are basically the same. It should be understood that there is no logical or temporal dependency between "first", "second", and "nth", nor is there a limitation on quantity and execution order.

Path planning: the path planning is one of main research topics in motion planning. The motion planning is comprised of path planning and trajectory planning. Sequence points or curves connecting starting positions and end positions are called paths, and strategies that constitute the paths are called the path planning. In the embodiments of the present disclosure, the path planning for a pool cleaning robot is also planning of cleaning paths for the pool cleaning robot.

The pool cleaning robot is a robot used for cleaning a pool, where cleaning the pool includes cleaning a pool bottom of the pool and cleaning pool walls of the pool.

In related technologies, there is a lack of path planning methods for the pool cleaning robot on the pool walls of the pool, resulting in failure of the pool cleaning robot in effectively cleaning the pool walls of the pool.

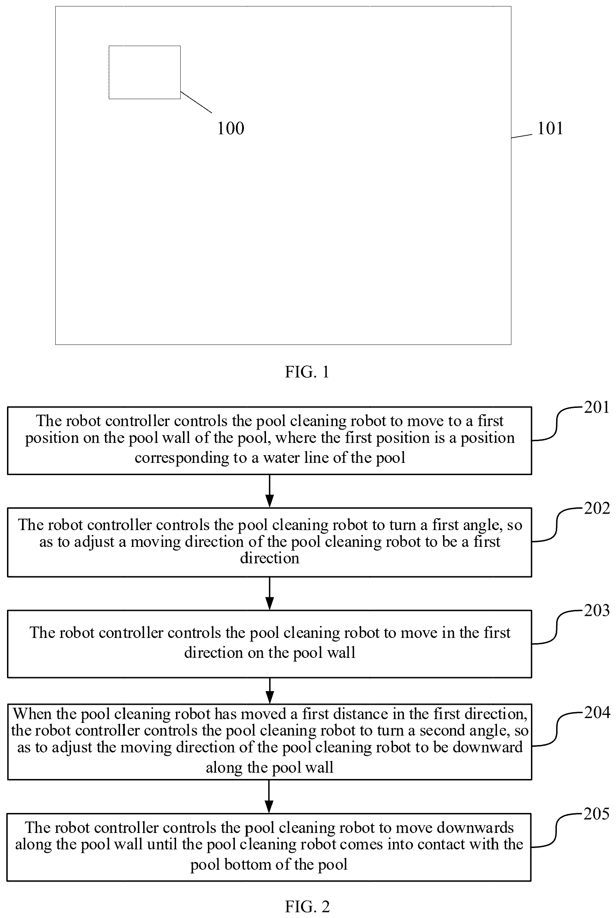

The technical solutions provided in the embodiments of the present disclosure can be applied in a scenario of controlling the pool cleaning robot to clean the pool walls of the pool. Referring to FIG. 1, a pool cleaning robot 100 has a wall climbing function and can adhere to a pool wall 101 of a pool. The pool cleaning robot 100 can move on the pool wall 101 of the pool under the control of a robot controller. For example, the pool cleaning robot 100 can move upwards along the pool wall 101 of the pool, can move downwards along the pool wall 101 of the pool, can move left or right along the pool wall 101 of the pool, and also can turn on the pool wall 101 of the pool. The embodiments of the present disclosure do not impose limits on motion modes of the pool cleaning robot moving on the pool wall 101.

The technical solutions provided in the embodiments of the present disclosure are described below. FIG. 2 is a flowchart of a path planning method for a pool cleaning robot provided in an embodiment of the present disclosure. Referring to FIG. 2, by taking an example where an execution body is the robot controller, the method includes following steps.

In Step 201, the robot controller controls the pool cleaning robot to move to a first position on the pool wall of the pool, where the first position is a position corresponding to a waterline of the pool.

The pool cleaning robot has a wall climbing function and can move on the pool wall of the pool. A bottom of the pool cleaning robot is also equipped with a travel unit. By driving the travel unit, the robot controller can control the pool cleaning robot to move on the pool wall of the pool. Of course, the bottom of the pool cleaning robot is also equipped with a cleaning unit, which can clean the pool wall of the pool. In some embodiments, the cleaning unit comprises a roller brush, and the pool wall can be cleaned by rotation of the roller brush. Alternatively, when the cleaning unit does not include the roller brush, the pool cleaning robot filters pool water by means of an internal driving apparatus and a filtering apparatus and then ejects the filtered pool water, thereby cleaning the pool wall. Of course, the cleaning unit may also include both the roller brush and a water ejection nozzle, but the embodiments of the present disclosure are not limited thereto. In some embodiments, the water pool in the embodiments of the present disclosure includes a swimming pool.

The first position on the pool wall of the pool is a starting position for the pool cleaning robot to clean the pool wall of the pool. The first position is tangent to the waterline of the pool, which means that the first position is just in contact with the waterline. The pool cleaning robot starts cleaning the pool wall of the pool from the first position, which means that the pool cleaning robot starts cleaning the pool wall of the pool from below the waterline of the pool. A cleaning function of the pool cleaning robot is activated during movement, which means that the pool cleaning robot can activate the cleaning function during movement to achieve cleaning of the pool wall of the pool. In some embodiments, the first position is below the waterline, and the first position is tangent to the waterline, or the first position is at the waterline. In addition, during the movement of the pool cleaning robot, the cleaning function of the pool cleaning robot may be activated or deactivated, but the embodiments of the present disclosure are not limited thereto.

In Step 202, the robot controller controls the pool cleaning robot to turn a first angle, so as to adjust a moving direction of the pool cleaning robot to be a first direction.

In some embodiments, the first direction is parallel to the waterline, which means that the first direction is a horizontal direction. Correspondingly, adjusting the moving direction of the pool cleaning robot to be the first direction means that the moving direction of the pool cleaning robot is adjusted to be the horizontal direction, such that the pool cleaning robot can clean the pool wall of the pool in the horizontal direction.

In Step 203, the robot controller controls the pool cleaning robot to move in the first direction on the pool wall.

By controlling the travel unit of the pool cleaning robot, the robot controller can control the pool cleaning robot to move in the first direction on the pool wall.

In Step 204, when the pool cleaning robot has moved a first distance in the first direction, the robot controller controls the pool cleaning robot to turn a second angle, so as to adjust the moving direction of the pool cleaning robot to be downward along the pool wall.

The first distance is a distance that the pool cleaning robot has moved in the horizontal direction, and the first distance is set by technical personnel according to actual situations, but the embodiments of the present disclosure are not limited thereto. When the pool wall is vertical, moving down along the pool wall means moving vertically down along the pool wall. When the pool wall is not vertical, moving down along the pool wall means moving down along a direction perpendicular to a connecting line between the pool wall and a pool bottom.

In Step 205, the robot controller controls the pool cleaning robot to move downwards along the pool wall until the pool cleaning robot comes into contact with the pool bottom of the pool.

When the pool cleaning robot comes into contact with the pool bottom of the pool, this indicates that the pool cleaning robot has completed a top-down cleaning of the pool wall.

By means of the technical solutions provided in the embodiments of the present disclosure, the pool cleaning robot can be controlled to reach the waterline and clean the pool wall. For example, starting from a position corresponding to the waterline of the pool, the pool cleaning robot first performs horizontal cleaning, followed by vertical cleaning until it comes into contact with the pool bottom of the pool. In this way, a top-down cleaning is completed. By controlling the pool cleaning robot to perform the top-down cleaning for multiple times, the pool cleaning robot can be controlled to perform relatively complete cleaning of the pool wall of the pool, thereby improving cleaning effects of the pool cleaning robot to the pool wall of the pool.

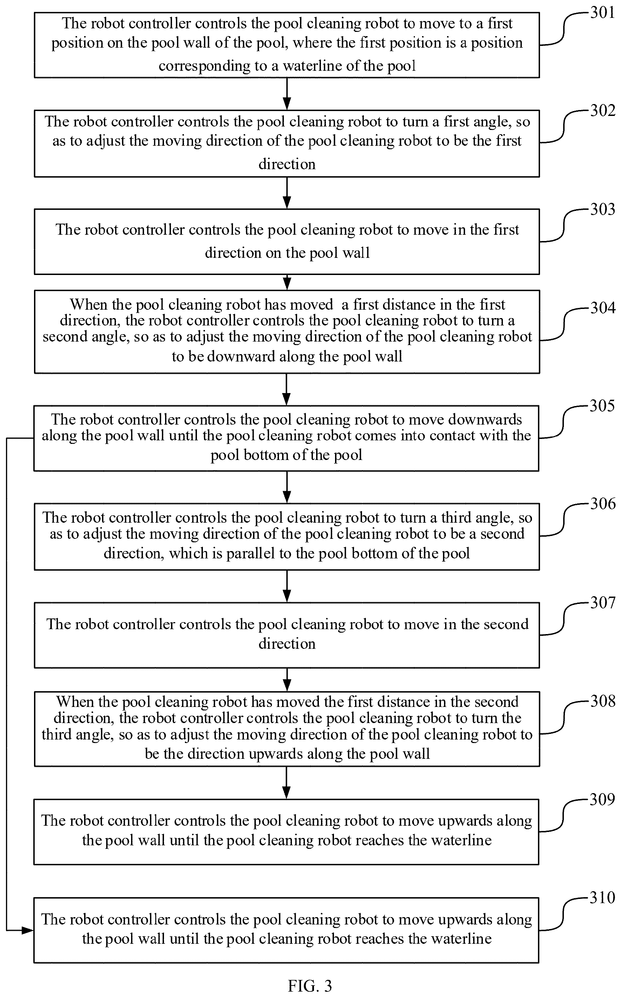

It should be noted that the above Steps 201 to 205 serve as a brief introduction of the technical solutions provided by the embodiments of the present disclosure. Below, a more detailed explanation of the technical solutions provided by the embodiments of the present disclosure will be made in conjunction with some examples. Referring to FIG. 3, by taking an example where the execution body is the robot controller, the method includes following steps.

In Step 301, the robot controller controls the pool cleaning robot to move to a first position on the pool wall of the pool, where the first position is a position corresponding to a waterline of the pool.

The pool cleaning robot is adhered to the pool wall of the pool and can move on the pool wall of the pool. The bottom of the pool cleaning robot is also equipped with a travel unit. By driving the travel unit, the robot controller can control the pool cleaning robot to move on the pool wall of the pool. The waterline refers to an intersecting line between a water surface and the pool wall. Of course, the bottom of the pool cleaning robot is also equipped with a cleaning unit, which can clean the pool wall of the pool. In some embodiments, the cleaning unit comprises a roller brush, and the pool wall can be cleaned by rotation of the roller brush. Alternatively, when the cleaning unit does not include the roller brush, the pool cleaning robot filters pool water by means of an internal driving apparatus and a filtering apparatus and then ejects the filtered pool water, thereby cleaning the pool wall. Of course, the cleaning unit may also include both the roller brush and a water ejection nozzle, but the embodiments of the present disclosure are not limited thereto.

The first position on the pool wall of the pool is a starting position for the pool cleaning robot to clean the pool wall of the pool. In some embodiments, the first position is below the waterline, and the first position is tangent to the waterline, or the first position is at the waterline. The first position is tangent to the waterline of the pool, which means that the first position is just in contact with the waterline. The pool cleaning robot starts cleaning the pool wall of the pool from the first position, which means that the pool cleaning robot starts cleaning the pool wall of the pool from below the waterline of the pool. In addition, during the movement of the pool cleaning robot, the cleaning function of the pool cleaning robot may be activated or deactivated, but the embodiments of the present disclosure are not limited thereto. The cleaning function of the pool cleaning robot is activated during movement, which means that the pool cleaning robot can activate the cleaning function during movement to achieve cleaning of the pool wall of the pool.

In some embodiments, the pool cleaning robot also includes a drive unit, which is connected to the robot controller and the travel unit. The drive unit is controlled by the robot controller, and can provide power to the travel unit, such that the pool cleaning robot can move on the pool wall of the pool by means of the travel unit. In some embodiments, the travel unit is a universal wheel. When the pool cleaning robot is positioned at the first position, the pool cleaning robot may be just not exposed to the water surface or may be just exposed to the water surface, but the embodiments of the present disclosure are not limited thereto.

In some embodiments, the pool cleaning robot is powered by an external power source. In this way, it may be ensured that the pool cleaning robot can complete a task such as cleaning the pool, in a scene with a larger area. Alternatively, the pool cleaning robot is powered by a built-in battery, freeing it from limitations of connecting wires. Thus, the pool cleaning robot can perform the cleaning task in a larger area. Alternatively, the pool cleaning robot is powered by a solar panel to reduce energy costs in using it for cleaning. The embodiments of the present disclosure do not impose limits on power supply modes of the pool cleaning robot.

In some embodiments, the pool cleaning robot also includes a gyroscope, which can determine a direction of the pool cleaning robot.

In some embodiments, the pool cleaning robot is positioned below the waterline, and the robot controller controls the pool cleaning robot to move upwards along the pool wall until the pool cleaning robot reaches the first position.

The pool cleaning robot is positioned below the waterline, which means that the pool cleaning robot is positioned below the water surface. The first position is directly above the starting position of the pool cleaning robot.

In this implementation, when the pool cleaning robot is positioned below the waterline, the robot controller can control the pool cleaning robot to move upwards along the pool wall, thereby controlling the pool cleaning robot to move towards the water surface until it reaches the first position.

In some embodiments, the pool cleaning robot also includes a position sensor for determining whether the pool cleaning robot is below or above the water surface. For example, the position sensor may be a buoyancy sensor that can detect buoyancy of water. For example, because the buoyancy of the pool cleaning robot in air is less than that in the water, the robot controller determines that the pool cleaning robot is below the water surface when the robot controller detects that the buoyancy is greater than a buoyancy threshold by means of the buoyancy sensor; and the robot controller determines that the pool cleaning robot is above the water surface when the robot controller detects that the buoyancy is less than or equal to the buoyancy threshold by means of the buoyancy sensor. When the robot controller detects that the pool cleaning robot is positioned below the waterline by means of the position sensor, the robot controller determines the direction of the pool cleaning robot by means of the gyroscope. The robot controller sends, based on the direction of the pool cleaning robot, a drive instruction to the drive unit of the pool cleaning robot. The drive instruction is used for instructing the drive unit to drive the travel unit of the pool cleaning robot, such that the pool cleaning robot moves upwards along the pool wall. In response to the drive instruction, the drive unit of the pool cleaning robot controls the pool cleaning robot to move. When the robot controller detects that the pool cleaning robot has just emerged from the water surface, that is, just reached the waterline, a drive stopping instruction is sent to the drive unit of the pool cleaning robot. The drive stopping instruction is used for instructing the drive unit to stop driving the travel unit, thereby controlling the pool cleaning robot to stop moving. A position where the pool cleaning robot stops is the first position.

In some embodiments, the pool cleaning robot is positioned below the waterline, and the robot controller controls the pool cleaning robot to move upwards along the pool wall until the pool cleaning robot reaches a second position above the waterline. The robot controller controls the pool cleaning robot to move downwards from the second position to the first position.

In this implementation, when the pool cleaning robot is positioned below the waterline, the robot controller can control the pool cleaning robot to move upwards along the pool wall and retreat below the waterline after the pool cleaning robot exceeds the waterline, thereby more accurately controlling the pool cleaning robot to reach the first position.

In some embodiments, when the robot controller detects that the pool cleaning robot is positioned below the waterline by means of the position sensor, the robot controller determines the direction of the pool cleaning robot by means of the gyroscope. The robot controller sends, based on the direction of the pool cleaning robot, a drive instruction to the drive unit of the pool cleaning robot. The drive instruction is used for instructing the drive unit to drive the travel unit of the pool cleaning robot, such that the pool cleaning robot moves upwards along the pool wall. In response to the drive instruction, the drive unit of the pool cleaning robot controls the pool cleaning robot to move. When the robot controller detects that the pool cleaning robot has completely emerged from the water surface, a drive stopping instruction is sent to the drive unit of the pool cleaning robot. The drive stopping instruction is used for instructing the drive unit to stop driving the travel unit, thereby controlling the pool cleaning robot to stop moving. At this moment, the position where the pool cleaning robot stops is the second position. The robot controller sends a drive instruction to the drive unit of the pool cleaning robot, where the drive instruction is used for instructing the drive unit to drive the pool cleaning robot to move in an opposite direction, such that the pool cleaning robot moves below the waterline. In response to the drive instruction, the drive unit of the pool cleaning robot controls the pool cleaning robot to move. When the robot controller detects that the pool cleaning robot has just moved below the waterline, a drive stopping instruction is sent to the drive unit of the pool cleaning robot. The drive stopping instruction is used for instructing the drive unit to stop driving the travel unit, thereby controlling the pool cleaning robot to stop moving. The position where the pool cleaning robot stops is the first position.

In some embodiments, the pool cleaning robot is positioned above the waterline, and the robot controller controls the pool cleaning robot to move downwards along the pool wall until the pool cleaning robot reaches the first position.

In this implementation, when the pool cleaning robot is positioned above the waterline, the robot controller can control the pool cleaning robot to move downwards along the pool wall, thereby controlling the pool cleaning robot to move towards the water surface until it reaches the first position.

In some embodiments, when the robot controller detects that the pool cleaning robot is positioned above the waterline by means of the position sensor, the robot controller determines the direction of the pool cleaning robot by means of the gyroscope. The robot controller sends, based on the direction of the pool cleaning robot, a drive instruction to the drive unit of the pool cleaning robot. The drive instruction is used for instructing the drive unit to drive the travel unit of the pool cleaning robot, such that the pool cleaning robot moves downwards along the pool wall. In response to the drive instruction, the drive unit of the pool cleaning robot controls the pool cleaning robot to move. When the robot controller detects that the pool cleaning robot has just emerged from the water surface, that is, just reached the waterline, a drive stopping instruction is sent to the drive unit of the pool cleaning robot. The drive stopping instruction is used for instructing the drive unit to stop driving the travel unit, thereby controlling the pool cleaning robot to stop moving. The position where the pool cleaning robot stops is the first position.

In some embodiments, the pool cleaning robot is positioned above the waterline, and the robot controller controls the pool cleaning robot to move downwards along the pool wall until the pool cleaning robot reaches a third position below the waterline. The pool cleaning robot is controlled to move upwards from the third position to the first position.

In some embodiments, when the robot controller detects that the pool cleaning robot is positioned above the waterline by means of the position sensor, the robot controller determines the direction of the pool cleaning robot by means of the gyroscope. The robot controller sends, based on the direction of the pool cleaning robot, a drive instruction to the drive unit of the pool cleaning robot. The drive instruction is used for instructing the drive unit to drive the travel unit of the pool cleaning robot, such that the pool cleaning robot moves downwards along the pool wall. In response to the drive instruction, the drive unit of the pool cleaning robot controls the pool cleaning robot to move. When the robot controller detects that the pool cleaning robot is completely positioned below the waterline, a drive stopping instruction is sent to the drive unit of the pool cleaning robot. The drive stopping instruction is used for instructing the drive unit to stop driving the travel unit, thereby controlling the pool cleaning robot to stop moving. At this moment, the position where the pool cleaning robot stops is the third position. The robot controller sends a drive instruction to the drive unit of the pool cleaning robot, where the drive instruction is used for instructing the drive unit to drive the pool cleaning robot to move in an opposite direction, such that the pool cleaning robot moves above the waterline. In response to the drive instruction, the drive unit of the pool cleaning robot controls the pool cleaning robot to move. When the robot controller detects that the pool cleaning robot has just moved below the waterline, a drive stopping instruction is sent to the drive unit of the pool cleaning robot. The drive stopping instruction is used for instructing the drive unit to stop driving the travel unit, thereby controlling the pool cleaning robot to stop moving. The position where the pool cleaning robot stops is the first position.

In Step 302, the robot controller controls the pool cleaning robot to turn a first angle, so as to adjust the moving direction of the pool cleaning robot to be the first direction.

In some embodiments, an angle between the first direction and the waterline is a target angle, for example, the target angle is 0 ° to 45 °. When the angle between the first direction and the waterline is 0 °, that is, the first direction is parallel to the waterline, the first direction is parallel to the waterline, which means that the first direction is a horizontal direction. Correspondingly, adjusting the moving direction of the pool cleaning robot to be the first direction means that the moving direction of the pool cleaning robot is adjusted to be the horizontal direction, such that the pool cleaning robot can clean the pool wall of the pool in the horizontal direction.

The first angle is related to the current moving direction of the pool cleaning robot, and the robot controller determines the direction of the pool cleaning robot by means of the gyroscope on the pool cleaning robot. The moving direction of the pool cleaning robot is an orientation of the pool cleaning robot.

In some embodiments, the robot controller determines a current orientation of the pool cleaning robot by means of the gyroscope. The robot controller determines a turning direction and the first angle based on difference between the current orientation of the pool cleaning robot and the first direction. The robot controller controls the pool cleaning robot to turn the first angle in the turning direction to adjust the moving direction of the pool cleaning robot to be the first direction.

In this implementation, the robot controller can determine the turning direction of the pool cleaning robot and the first angle according to the difference between the current orientation of the pool cleaning robot and the first direction. Thus, by controlling the pool cleaning robot to turn the first angle in the turning direction, the moving direction of the pool cleaning robot can be adjusted to be the first direction, that is, the horizontal direction. Subsequently, the pool cleaning robot can be controlled to clean the pool wall of the pool in the horizontal direction.

In some embodiments, the robot controller determines a current orientation of the pool cleaning robot by means of the gyroscope. The robot controller determines a turning direction and the first angle based on difference between the current orientation of the pool cleaning robot and the first direction. The robot controller sends a drive instruction to the drive unit of the pool cleaning robot, where the drive instruction is used for instructing the drive unit to rotate the pool cleaning robot by the first angle in the turning direction. In response to the drive instruction, the drive unit drives the travel unit of the pool cleaning robot, thereby controlling the pool cleaning robot to turn the first angle in the turning direction, so as to adjust the moving direction of the pool cleaning robot to be the first direction. For example, when the angle between the orientation of the pool cleaning robot and the waterline is 180 °, the first angle is 90 °, which means adjusting the orientation of the pool cleaning robot from the direction upwards along the pool wall to be the horizontal direction.

In Step 303, the robot controller controls the pool cleaning robot to move in the first direction on the pool wall.

By controlling the travel unit of the pool cleaning robot, the robot controller can control the pool cleaning robot to move in the first direction on the pool wall.

In some embodiments, the robot controller sends a drive instruction to the drive unit of the pool cleaning robot, where the drive instruction is used for instructing the drive unit to move the pool cleaning robot forward. Because the moving direction of the pool cleaning robot has been adjusted to be the first direction in the Step 302, the robot controller directly drives the pool cleaning robot to move forward through the drive instruction, such that the pool cleaning robot moves in the first direction on the pool wall. Because the first direction is the horizontal direction, the pool cleaning robot moves along the horizontal direction on the pool wall.

In some embodiments, in the process when the robot controller controls the pool cleaning robot to move in the first direction, the robot controller can determine the orientation of the pool cleaning robot by means of the gyroscope. When the pool cleaning robot deviates from the first direction, the robot controller controls the pool cleaning robot to adjust the moving direction to be the first direction, thereby ensuring that the pool cleaning robot moves along the horizontal direction on the pool wall. Of course, when the pool cleaning robot moves in the horizontal direction, the cleaning function of the pool cleaning robot is remained on, that is, a position where the pool cleaning robot passes through is cleaned by means of the cleaning unit of the pool cleaning robot.

In Step 304, when the pool cleaning robot has moved a first distance in the first direction, the robot controller controls the pool cleaning robot to turn a second angle, so as to adjust the moving direction of the pool cleaning robot to be downward along the pool wall.

The first distance is a distance that the pool cleaning robot has moved in the horizontal direction, and the first distance is set by technical personnel according to actual situations, but the embodiments of the present disclosure are not limited thereto. In some embodiments, the first distance is a width of the pool cleaning robot. When the pool wall is vertical, moving down along the pool wall means moving vertically down along the pool wall. When the pool wall is not vertical, moving down along the pool wall means moving down along a direction perpendicular to a connecting line between the pool wall and the pool bottom.

In some embodiments, when the pool cleaning robot has moved the first distance in the first direction, the robot controller determines, based on the difference between the current orientation of the pool cleaning robot and the direction downwards along the pool wall, the turning direction and the second angle. The robot controller controls the pool cleaning robot to turn the second angle in the turning direction to adjust the moving direction of the pool cleaning robot to be downwards along the pool wall.

In this implementation, the robot controller can determine the turning direction of the pool cleaning robot and the second angle according to the difference between the current orientation of the pool cleaning robot and the direction downwards along the pool wall. Thus, by controlling the pool cleaning robot to turn the second angle in the turning direction, the moving direction of the pool cleaning robot can be adjusted to be the direction downwards along the pool wall, that is, the vertical direction. Subsequently, the pool cleaning robot can be controlled to clean the pool wall of the pool in the vertical direction.

In some embodiments, the robot controller determines the current orientation of the pool cleaning robot by means of the gyroscope. The robot controller determines a turning direction and the second angle based on difference between the current orientation of the pool cleaning robot and the direction downwards along the pool wall. The robot controller sends a drive instruction to the drive unit of the pool cleaning robot, where the drive instruction is used for instructing the drive unit to rotate the pool cleaning robot by the second angle in the turning direction. In response to the drive instruction, the drive unit drives the travel unit of the pool cleaning robot, thereby controlling the pool cleaning robot to turn the second angle in the turning direction, so as to adjust the moving direction of the pool cleaning robot to be the direction downwards along the pool wall. For example, when the orientation of the pool cleaning robot is parallel to the waterline, the second angle is 90 °, which means adjusting the orientation of the pool cleaning robot from the horizontal direction to the direction downwards along the pool wall.

In Step 305, the robot controller controls the pool cleaning robot to move downwards along the pool wall until the pool cleaning robot comes into contact with the pool bottom of the pool.

When the pool cleaning robot comes into contact with the pool bottom of the pool, this indicates that the pool cleaning robot has completed a top-down cleaning of the pool wall.

In some embodiments, the robot controller sends a drive instruction to the drive unit of the pool cleaning robot, where the drive instruction is used for instructing the drive unit to move the pool cleaning robot forward. Because the moving direction of the pool cleaning robot has been adjusted to be the direction downwards along the pool wall in the Step 304, the robot controller directly drives the pool cleaning robot to move forward through the drive instruction, such that the pool cleaning robot moves downwards along the pool wall. When the pool wall is vertical, the pool cleaning robot moves downwards along the vertical direction on the pool wall. When detecting that the pool cleaning robot comes into contact with the pool bottom of the pool, the robot controller controls the pool cleaning robot to stop moving.

In some embodiments, when the robot controller controls the pool cleaning robot to move downwards on the pool wall, the robot controller can determine the orientation of the pool cleaning robot by means of the gyroscope. When the pool cleaning robot deviates from the direction downwards along the pool wall, the robot controller controls the pool cleaning robot to adjust the moving direction to be the direction downwards along the pool wall, thereby ensuring that the pool cleaning robot moves along the vertical direction on the pool wall. Of course, when the pool cleaning robot moves in the vertical direction, the cleaning function of the pool cleaning robot is remained on, that is, a position where the pool cleaning robot passes through is cleaned by means of the cleaning unit of the pool cleaning robot.

In some embodiments, after the Step 305, the robot controller can perform Steps 306 to 309 or Step 310, but the embodiments of the present disclosure are not limited thereto.

In the Step 306, the robot controller controls the pool cleaning robot to turn a third angle, so as to adjust the moving direction of the pool cleaning robot to be a second direction, which is parallel to the pool bottom of the pool.

The second direction is parallel to the pool bottom of the pool, that is, the second direction is the horizontal direction. Correspondingly, adjusting the moving direction of the pool cleaning robot to be the second direction means that the moving direction of the pool cleaning robot is adjusted to be the horizontal direction, such that the pool cleaning robot can clean the pool wall of the pool in the horizontal direction on the pool bottom. The second angle is related to the current moving direction of the pool cleaning robot, and the robot controller determines the direction of the pool cleaning robot by means of the gyroscope on the pool cleaning robot.

In some embodiments, the robot controller determines the current orientation of the pool cleaning robot by means of the gyroscope. The robot controller determines a turning direction and the third angle based on difference between the current orientation of the pool cleaning robot and the second direction. The robot controller controls the pool cleaning robot to turn the third angle in the turning direction to adjust the moving direction of the pool cleaning robot to be the second direction.

In this implementation, the robot controller can determine the turning direction of the pool cleaning robot and the third angle according to the difference between the current orientation of the pool cleaning robot and the second direction. Thus, by controlling the pool cleaning robot to turn the third angle in the turning direction, the moving direction of the pool cleaning robot can be adjusted to be the second direction, that is, the horizontal direction. Subsequently, the pool cleaning robot can be controlled to clean the pool wall of the pool in the horizontal direction.

In some embodiments, the robot controller determines the current orientation of the pool cleaning robot by means of the gyroscope. The robot controller determines a turning direction and the third angle based on difference between the current orientation of the pool cleaning robot and the second direction. The robot controller sends a drive instruction to the drive unit of the pool cleaning robot, where the drive instruction is used for instructing the drive unit to rotate the pool cleaning robot by the third angle in the turning direction. In response to the drive instruction, the drive unit drives the travel unit of the pool cleaning robot, thereby controlling the pool cleaning robot to turn the third angle in the turning direction, so as to adjust the moving direction of the pool cleaning robot to be the second direction. For example, when the angle between the orientation of the pool cleaning robot and the waterline is 180 °, the third angle is 90 °, which means adjusting the orientation of the pool cleaning robot from the direction downwards along the pool wall to be the horizontal direction.

In the Step 307, the robot controller controls the pool cleaning robot to move in the second direction.

In some embodiments, the robot controller sends a drive instruction to the drive unit of the pool cleaning robot, where the drive instruction is used for instructing the drive unit to move the pool cleaning robot forward. Because the moving direction of the pool cleaning robot has been adjusted to be the second direction in the Step 306, the robot controller directly drives the pool cleaning robot to move forward through the drive instruction, such that the pool cleaning robot moves in the second direction on the pool wall. Because the second direction is the horizontal direction, the pool cleaning robot moves along the horizontal direction on the bottom of the pool wall.

In some embodiments, in the process when the robot controller controls the pool cleaning robot to move in the second direction, the robot controller can determine the orientation of the pool cleaning robot by means of the gyroscope. When the pool cleaning robot deviates from the second direction, the robot controller controls the pool cleaning robot to adjust the moving direction to be the second direction, thereby ensuring that the pool cleaning robot moves along the horizontal direction on the pool wall. Of course, when the pool cleaning robot moves in the horizontal direction, the cleaning function of the pool cleaning robot is remained on, that is, a position where the pool cleaning robot passes through is cleaned by means of the cleaning unit of the pool cleaning robot.

In the Step 308, when the pool cleaning robot has moved the first distance in the second direction, the robot controller controls the pool cleaning robot to turn the third angle, so as to adjust the moving direction of the pool cleaning robot to be the direction upwards along the pool wall.

In some embodiments, when the pool cleaning robot has moved the first distance in the second direction, the robot controller determines a turning direction and the third angle based on the difference between the current orientation of the pool cleaning robot and the direction upwards along the pool wall. The robot controller controls the pool cleaning robot to turn the third angle in the turning direction to adjust the moving direction of the pool cleaning robot to be the direction upwards along the pool wall.

In this implementation, the robot controller can determine the turning direction of the pool cleaning robot and the third angle according to the difference between the current orientation of the pool cleaning robot and the direction upwards along the pool wall. Thus, by controlling the pool cleaning robot to turn the third angle in the turning direction, the moving direction of the pool cleaning robot can be adjusted to be the direction upwards along the pool wall, that is, the vertical direction. Subsequently, the pool cleaning robot can be controlled to clean the pool wall of the pool in the vertical direction.

In some embodiments, the robot controller determines the current orientation of the pool cleaning robot by means of the gyroscope. The robot controller determines a turning direction and the third angle based on difference between the current orientation of the pool cleaning robot and the direction upwards along the pool wall. The robot controller sends a drive instruction to the drive unit of the pool cleaning robot, where the drive instruction is used for instructing the drive unit to rotate the pool cleaning robot by the third angle in the turning direction. In response to the drive instruction, the drive unit drives the travel unit of the pool cleaning robot, thereby controlling the pool cleaning robot to turn the third angle in the turning direction, so as to adjust the moving direction of the pool cleaning robot to be the direction upwards along the pool wall. For example, when the orientation of the pool cleaning robot is parallel to the waterline, the third angle is 90 °, which means adjusting the orientation of the pool cleaning robot from the horizontal direction to the direction upwards along the pool wall.

In the Step 309, the robot controller controls the pool cleaning robot to move upwards along the pool wall until the pool cleaning robot reaches the waterline.

When the pool cleaning robot reaches the waterline, this means that the pool cleaning robot has completed a bottom-top cleaning of the pool wall.

In some embodiments, the robot controller sends a drive instruction to the drive unit of the pool cleaning robot, where the drive instruction is used for instructing the drive unit to move the pool cleaning robot forward. Because the moving direction of the pool cleaning robot has been adjusted to be the direction upwards along the pool wall in the Step 308, the robot controller directly drives the pool cleaning robot to move forward through the drive instruction, such that the pool cleaning robot moves upwards along the pool wall. When the pool wall is vertical, the pool cleaning robot moves upwards along the vertical direction on the pool wall. When detecting that the pool cleaning robot has reached the waterline, the robot controller controls the pool cleaning robot to stop moving.

In some embodiments, in the process when the robot controller controls the pool cleaning robot to move upwards along the pool wall, the robot controller can determine the orientation of the pool cleaning robot by means of the gyroscope. When the pool cleaning robot deviates from the direction upwards along the pool wall, the robot controller controls the pool cleaning robot to adjust the moving direction to be the direction upwards along the pool wall, thereby ensuring that the pool cleaning robot moves along the vertical direction on the pool wall. Of course, when the pool cleaning robot moves in the vertical direction, the cleaning function of the pool cleaning robot is remained on, that is, a position where the pool cleaning robot passes through is cleaned by means of the cleaning unit of the pool cleaning robot.

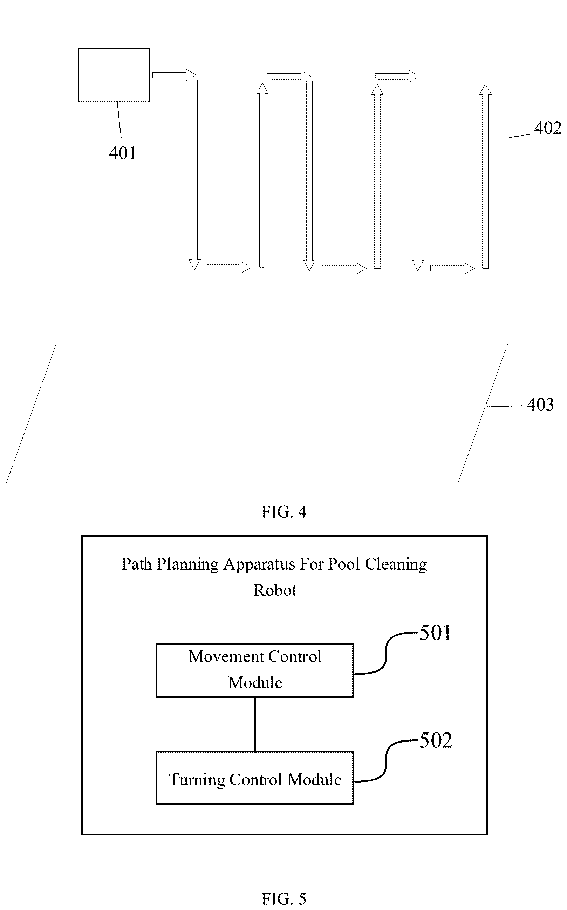

Referring to FIG. 4, a cleaning route of the pool cleaning robot provided by the above Steps 301 to 309 is shown. As can be seen from FIG. 4, after the above Steps 301 to 309 are used, the pool cleaning robot 401 can completely clean the pool wall 402 of the pool in both the horizontal direction and the vertical direction. To clarify a relationship, FIG. 4 shows the pool bottom 403 of the pool.

In the Step 310, the robot controller controls the pool cleaning robot to move upwards along the pool wall until the pool cleaning robot reaches the waterline.

In some embodiments, the robot controller controls the pool cleaning robot to turn a fourth angle, so as to adjust the moving direction of the pool cleaning robot on the pool wall to be the direction upwards along the pool wall. The robot controller controls the pool cleaning robot to move forward.

In this implementation, the robot controller can determine the turning direction of the pool cleaning robot and the fourth angle according to the difference between the current orientation of the pool cleaning robot and the direction upwards along the pool wall. Thus, by controlling the pool cleaning robot to turn the fourth angle in the turning direction, the moving direction of the pool cleaning robot can be adjusted to be the direction upwards along the pool wall, that is, the vertical direction. Subsequently, the pool cleaning robot can be controlled to repeatedly clean the pool wall of the pool in the vertical direction.

In some embodiments, the robot controller determines the current orientation of the pool cleaning robot by means of the gyroscope. The robot controller determines a turning direction and the fourth angle based on difference between the current orientation of the pool cleaning robot and the direction upwards along the pool wall. The robot controller controls the pool cleaning robot to turn the fourth angle in the turning direction, so as to adjust the moving direction of the pool cleaning robot to be the direction upwards along the pool wall. The robot controller sends a drive instruction to the drive unit of the pool cleaning robot, where the drive instruction is used for instructing the drive unit to move the pool cleaning robot forward.

For example, the robot controller determines the current orientation of the pool cleaning robot by means of the gyroscope. The robot controller determines a turning direction and the fourth angle based on difference between the current orientation of the pool cleaning robot and the direction upwards along the pool wall. The robot controller sends a drive instruction to the drive unit of the pool cleaning robot, where the drive instruction is used for instructing the drive unit to rotate the pool cleaning robot by the fourth angle in the turning direction. In response to the drive instruction, the drive unit drives the travel unit of the pool cleaning robot, thereby controlling the pool cleaning robot to turn the fourth angle in the turning direction, so as to adjust the moving direction of the pool cleaning robot to be the direction upwards along the pool wall. For example, when the angle between the orientation of the pool cleaning robot and the waterline is 180 °, the fourth angle is 180°, which means adjusting the orientation of the pool cleaning robot from the direction downwards along the pool wall to the direction upwards along the pool wall. The robot controller sends a drive instruction to the drive unit of the pool cleaning robot, where the drive instruction is used for instructing the drive unit to move the pool cleaning robot forward.

In some embodiments, the robot controller controls the pool cleaning robot to retreat upwards along the pool wall.

In this implementation, the robot controller can directly control the pool cleaning robot to retreat without adjusting the direction, thereby achieving higher efficiency in cleaning the pool wall.

In some embodiments, the robot controller sends a drive instruction to the drive unit of the pool cleaning robot, where the drive instruction is used for instructing the drive unit to drive the pool cleaning robot to backtrack. In response to the drive instruction, the drive unit drives, by driving the travel unit, the pool cleaning robot to backtrack.

It should be explained that the pool cleaning robot can also automatically avoid an obstacle during the movement process in any one of the above steps.

In some embodiments, when the pool cleaning robot detects an obstacle, the robot controller controls the pool cleaning robot to avoid the obstacle and then return to a target cleaning path, where the target cleaning path is a path where the pool cleaning robot is positioned before the obstacle is detected.

The pool cleaning robot also includes a visual sensor or radar.

In some embodiments, when an obstacle is detected in front of the moving direction of the pool cleaning robot by means of the visual sensor or radar, the robot controller sets an obstacle avoidance route for the pool cleaning robot by using algorithms such as a simulated annealing algorithm, an artificial potential field algorithm, a fuzzy logic algorithm, or a tabu search algorithm. The robot controller controls the pool cleaning robot to move along the obstacle avoidance route, thereby avoiding the obstacle. The robot controller controls the pool cleaning robot to return to the target cleaning path and continue cleaning after the obstacle is avoided.

In some embodiments, when controlling the pool cleaning robot to move, the robot controller may also control the pool cleaning robot to make oscillating movement on two sides of the moving direction, thereby expanding a cleaning range of the pool cleaning robot and improving the cleaning effects to the pool wall of the pool.

Optional embodiments of the present disclosure may be formed by arbitrary combination of all the foregoing optional technical solutions, and thus are not to be repeated any more herein.

By means of the technical solutions provided in the embodiments of the present disclosure, the pool cleaning robot can be controlled to first perform horizontal cleaning starting from a position corresponding to the waterline of the pool, followed by vertical cleaning until it comes into contact with the pool bottom of the pool. In this way, a top-down cleaning is completed. By controlling the pool cleaning robot to perform the top-down cleaning for multiple times, the pool cleaning robot can be controlled to perform relatively complete cleaning of the pool wall of the pool, thereby improving the cleaning effects of the pool cleaning robot to the pool wall of the pool.

FIG. 5 is a schematic structural diagram of a path planning apparatus for a pool cleaning robot provided in an embodiment of the present disclosure. Referring to FIG. 5, the apparatus includes a movement control module 501 and a turning control module 502.

The movement control module 501 is configured to control the pool cleaning robot to move to a first position on a pool wall of a pool, where the first position is a position corresponding to a waterline of the pool.

The turning control module 502 is configured to control the pool cleaning robot to turn a first angle, so as to adjust a moving direction of the pool cleaning robot to be a first direction.

The movement control module 501 is also configured to control the pool cleaning robot to move in the first direction on the pool wall.

The turning control module 502 is also configured to control, when the pool cleaning robot has moved a first distance in the first direction, the pool cleaning robot to turn a second angle, so as to adjust the moving direction of the pool cleaning robot to be downward along the pool wall.

The movement control module 501 is also configured to control the pool cleaning robot to move downwards along the pool wall.

In some embodiments, the movement control module 501 is also configured to control the pool cleaning robot to move downwards along the pool wall until the pool cleaning robot comes into contact with the pool bottom of the pool.

In some embodiments, the pool cleaning robot is positioned below the waterline, and the movement control module 501 is configured to:
control the pool cleaning robot to move upwards along the pool wall until the pool cleaning robot reaches the first position; or
control the pool cleaning robot to move upwards along the pool wall until the pool cleaning robot reaches a second position above the waterline; or control the pool cleaning robot to move downwards from the second position to the first position.

In some embodiments, the pool cleaning robot is positioned above the waterline, and the movement control module 501 is configured to:
control the pool cleaning robot to move downwards along the pool wall until the pool cleaning robot reaches the first position; or
control the pool cleaning robot to move downwards along the pool wall until the pool cleaning robot reaches a third position below the waterline; or control the pool cleaning robot to move upwards from the third position to the first position.

In some embodiments, the turning control module 502 is also configured to control the pool cleaning robot to turn a third angle, so as to adjust the moving direction of the pool cleaning robot to be a second direction, which is parallel to the pool bottom of the pool.

The movement control module 501 is also configured to control the pool cleaning robot to move in the second direction.

The turning control module 502 is also configured to control, when the pool cleaning robot has moved the first distance in the second direction, the pool cleaning robot to turn the third angle, so as to adjust the moving direction of the pool cleaning robot to be a direction upwards along the pool wall.

The movement control module 501 is also configured to control the pool cleaning robot to move upwards along the pool wall until the pool cleaning robot reaches the waterline.

In some embodiments, the movement control module 501 is also configured to control the pool cleaning robot to move upwards along the pool wall until the pool cleaning robot reaches the waterline.

In some embodiments, the movement control module 501 is configured to:
control the pool cleaning robot to turn a fourth angle, so as to adjust the moving direction of the pool cleaning robot on the pool wall to be the direction upwards along the pool wall; or control the pool cleaning robot to move forward; or
control the pool cleaning robot to retreat upwards along the pool wall.

In some embodiments, the apparatus also includes an obstacle avoidance module.

The obstacle avoidance module is configured to control, when the pool cleaning robot detects an obstacle, the pool cleaning robot to avoid the obstacle and then return to a target cleaning path, where the target cleaning path is a path where the pool cleaning robot is positioned before the obstacle is detected.

It should be explained that, when the path planning apparatus for the pool cleaning robot provided by the above embodiments performs path planning to the pool cleaning robot, the above divided respective function modules are described as an example. In actual applications, the above allocated functions may be implemented with different function modules according to actual needs, that is, the inner structure of the robot controller may be divided into different function modules to accomplish part or all of the functions described as above. In addition, the path planning apparatus for the pool cleaning robot and the path planning method for the pool cleaning robot provided in the above embodiments belong to the same concept. Therefore, reference may be made to the method embodiments for specific implementation processes of the path planning apparatus, and thus detailed descriptions thereof are omitted here.

By means of the technical solutions provided in the embodiments of the present disclosure, the pool cleaning robot can be controlled to first perform horizontal cleaning starting from a position corresponding to the waterline of the pool, followed by vertical cleaning until it comes into contact with the pool bottom of the pool. In this way, a top-down cleaning is completed. By controlling the pool cleaning robot to perform the top-down cleaning for multiple times, the pool cleaning robot can be controlled to perform relatively complete cleaning of the pool wall of the pool, thereby improving the cleaning effects of the pool cleaning robot to the pool wall of the pool.

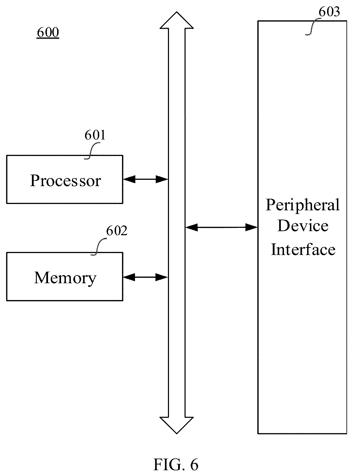

The embodiments of the present disclosure provide a pool cleaning robot, which includes a robot controller. FIG. 6 is a schematic structural diagram of the robot controller provided in the embodiments of the present disclosure. Typically, the robot controller 600 includes one or more processors 601 and one or more memories 602.

The processor 601 may include one or more processing cores, such as a quad-core processor or an octa-core processor. The processor 601 may be implemented in at least one hardware form from Digital Signal Processing (DSP), Field-Programmable Gate Array (FPGA), and Programmable Logic Array (PLA). The processor 601 may also include a main processor and a co-processor. The main processor is a processor used for processing data in an awake state, and is also known as a Central Processing Unit (CPU). The co-processor is a low power processor used for processing data in a standby state. In some embodiments, the processor 601 may be integrated with a Graphics Processing Unit (GPU), which is used for rendering and drawing contents required to be displayed on a display screen. In some embodiments, the processor 601 may also include an AI (Artificial Intelligence) processor for processing computational operations related to machine learning.

The memory 602 may include one or more computer-readable storage media, which may be non-transient. The memory 602 may also include a high-speed random access memory, and a non-volatile memory such as one or more disk storage devices or flash storage devices. In some embodiments, the non-transient computer-readable storage medium in the memory 602 is used for storing at least one computer program for execution by the processor 601 to implement the path planning method for the pool cleaning robot provided in the method embodiments of the present disclosure.

In some embodiments, the robot controller 600 may also optionally include a peripheral device interface 603 and at least one peripheral device. The processor 601, the memory 602, and the peripheral device interface 603 may be connected through a bus or signal line. Each peripheral device may be connected to the peripheral device interface 603 through a bus, signal line, or circuit board.

Those skilled in the art may understand that the structure shown in FIG. 6 does not constitute a limitation on the robot controller 600, and may include more or fewer components than shown in the figure, or combine some components, or adopt different component arrangements.

In an exemplary embodiment, there is also provided a computer-readable storage medium such as a memory comprising a computer program. The computer program may be executed by the processor to perform the path planning method for the pool cleaning robot in the above embodiments. For example, the computer-readable storage medium may be a Read-Only Memory (ROM), a Random Access Memory (RAM), a Compact Disc Read-Only Memory (CD-ROM), a magnetic tape, a floppy disk, or an optical data storage device.

In an exemplary embodiment, there is also provided a computer program product or computer program comprising program code stored in a computer-readable storage medium. The processor of the robot controller reads the program code from the computer-readable storage medium, the processor executes the program code, causing the robot controller to perform the path planning method for the pool cleaning robot as described above.

In some embodiments, the computer program involved in the embodiments of the present disclosure may be deployed and executed on one robot controller, or executed on a plurality of robot controllers positioned in one location, or executed on a plurality of robot controllers distributed in a plurality of locations and interconnected through a communication network. The plurality of robot controllers distributed in the plurality of locations and interconnected through the communication network may form a blockchain system.

It should be understood for those skilled in the art that all or some steps in the above embodiments may be implemented by hardware, or by programs instructing related hardware. The programs may be stored in a computer-readable storage medium. The storage medium described as above may be a red-only memory, a magnetic disc, an optical disc or the like.

The embodiments set forth above are only illustrated as alternative embodiments of the present disclosure, and are not intended to limit the present disclosure. All modifications, equivalent substitutions and improvements made within the spirit and principles of the present disclosure shall fall within the protection scope of the present disclosure.

## Claims

1. A path planning method for a pool cleaning robot, comprising:
controlling the pool cleaning robot to move to a first position on a pool wall of a pool, the first position being a position corresponding to a waterline of the pool;
controlling the pool cleaning robot to turn a first angle, so as to adjust a moving direction of the pool cleaning robot to be a first direction;
controlling the pool cleaning robot to move in the first direction on the pool wall;
when the pool cleaning robot has moved a first distance in the first direction, controlling the pool cleaning robot to turn a second angle, so as to adjust the moving direction of the pool cleaning robot to be downward along the pool wall; and
controlling the pool cleaning robot to move downwards along the pool wall.

2. The method according to claim 1, wherein the controlling the pool cleaning robot to move downwards along the pool wall comprises:
controlling the pool cleaning robot to move downwards along the pool wall until the pool cleaning robot comes into contact with a pool bottom of the pool.

3. The method according to claim 1, wherein the pool cleaning robot is positioned below the waterline, and the controlling the pool cleaning robot to move to the first position on the pool wall of the pool comprises:
controlling the pool cleaning robot to move upwards along the pool wall until the pool cleaning robot reaches the first position; or
controlling the pool cleaning robot to move upwards along the pool wall until the pool cleaning robot reaches a second position above the waterline; and controlling the pool cleaning robot to move downwards from the second position to the first position.

4. The method according to claim 1, wherein the pool cleaning robot is positioned above the waterline, and the controlling the pool cleaning robot to move to the first position on the pool wall of the pool comprises:
controlling the pool cleaning robot to move downwards along the pool wall until the pool cleaning robot reaches the first position; or
controlling the pool cleaning robot to move downwards along the pool wall until the pool cleaning robot reaches a third position below the waterline; and controlling the pool cleaning robot to move upwards from the third position to the first position.

5. The method according to claim 1, wherein the controlling the pool cleaning robot to move downwards along the pool wall further comprises:
controlling the pool cleaning robot to turn a third angle, so as to adjust the moving direction of the pool cleaning robot to be a second direction;
controlling the pool cleaning robot to move in the second direction;
when the pool cleaning robot has moved the first distance in the second direction, controlling the pool cleaning robot to turn a third angle, so as to adjust the moving direction of the pool cleaning robot to be a direction upwards along the pool wall; and
controlling the pool cleaning robot to move upwards along the pool wall until the pool cleaning robot reaches the waterline; or
controlling the pool cleaning robot to move upwards along the pool wall until the pool cleaning robot reaches the position corresponding to the waterline.

6. The method according to claim 5, wherein the controlling the pool cleaning robot to move upwards along the pool wall comprises:
controlling the pool cleaning robot to turn a fourth angle, so as to adjust the moving direction of the pool cleaning robot on the pool wall to be the direction upwards along the pool wall; or
controlling the pool cleaning robot to move forward; or
controlling the pool cleaning robot to retreat upwards along the pool wall.

7. The method according to claim 6, wherein the first angle, the second angle, the third angle, and the fourth angle are separately selected from angles between 0 and 180 degrees.

8. The method according to claim 5, wherein the first direction and the second direction are separately parallel or not parallel to the waterline.

9. The method according to claim 1, wherein after the controlling the pool cleaning robot to move downwards along the pool wall, the method further comprises:
controlling, when the pool cleaning robot detects an obstacle, the pool cleaning robot to avoid the obstacle and then return to a target cleaning path, the target cleaning path being a path where the pool cleaning robot is positioned before the obstacle is detected.

10. The method according to claim 9, wherein the controlling, when the pool cleaning robot detects the obstacle, the pool cleaning robot to avoid the obstacle and then return to the target cleaning path comprises:
setting an obstacle avoidance route for the pool cleaning robot when an obstacle is detected in front of the moving direction of the pool cleaning robot by means of a visual sensor or radar;
controlling the pool cleaning robot to move along the obstacle avoidance route to avoid the obstacle; and
controlling the pool cleaning robot to return to the target cleaning path and continue cleaning after the obstacle is avoided.

11. The method according to claim 1 further comprising:
when controlling the pool cleaning robot to move, controlling the pool cleaning robot to make oscillating movement on two sides of the moving direction, to expand a cleaning range of the pool cleaning robot.

12. A path planning apparatus for a pool cleaning robot, comprising:
a movement control module configured to control the pool cleaning robot to move to a first position on a pool wall of a pool, the first position being a position corresponding to a waterline of the pool; and
a turning control module configured to control the pool cleaning robot to turn a first angle, so as to adjust a moving direction of the pool cleaning robot to be a first direction;
wherein
the movement control module is further configured to control the pool cleaning robot to move in the first direction on the pool wall;
the turning control module is further configured to control, when the pool cleaning robot has moved a first distance in the first direction, the pool cleaning robot to turn a second angle, so as to adjust the moving direction of the pool cleaning robot to be downward along the pool wall; and
the movement control module is further configured to control the pool cleaning robot to move downwards along the pool wall.

13. A pool cleaning robot comprising a robot controller, the robot controller comprising one or more processors and one or more memories, wherein the one or more memories store at least one computer program, the computer program being loaded by the one or more processors to execute steps of:
controlling the pool cleaning robot to move to a first position on a pool wall of a pool, the first position being a position corresponding to a waterline of the pool;
controlling the pool cleaning robot to turn a first angle, so as to adjust a moving direction of the pool cleaning robot to be a first direction;
controlling the pool cleaning robot to move in the first direction on the pool wall;
when the pool cleaning robot has moved a first distance in the first direction, controlling the pool cleaning robot to turn a second angle, so as to adjust the moving direction of the pool cleaning robot to be downward along the pool wall; and
controlling the pool cleaning robot to move downwards along the pool wall.

14. A computer-readable storage medium storing at least one computer program, the computer program being loaded by a processor to execute steps of:
controlling the pool cleaning robot to move to a first position on a pool wall of a pool, the first position being a position corresponding to a waterline of the pool;
controlling the pool cleaning robot to turn a first angle, so as to adjust a moving direction of the pool cleaning robot to be a first direction;
controlling the pool cleaning robot to move in the first direction on the pool wall;
when the pool cleaning robot has moved a first distance in the first direction, controlling the pool cleaning robot to turn a second angle, so as to adjust the moving direction of the pool cleaning robot to be downward along the pool wall; and
controlling the pool cleaning robot to move downwards along the pool wall.
